# EUROPÄISCHE PATENTSCHRIFT

(11) **EP 2 901 414 B1**
(45) Veröffentlichungstag und Bekanntmachung des Hinweises auf die Patenterteilung: **01.03.2017**
(21) Anmeldenummer: 12778257.1
(22) Anmeldetag: 28.09.2012
(51) Int. Cl.: G06T 7/00

(54) **VERFAHREN UND BILDVERARBEITUNGSANLAGE ZUM BESTIMMEN VON PARAMETERN EINER KAMERA**
METHOD AND IMAGE PROCESSING SYSTEM FOR DETERMINING PARAMETERS OF A CAMERA
PROCÉDÉ ET INSTALLATION DE TRAITEMENT D'IMAGES POUR DÉTERMINER DES PARAMÈTRES D'UNE CAMÉRA

(43) Veröffentlichungstag der Anmeldung: 05.08.2015
(73) Patentinhaber: Fayteq AG, 99094 Erfurt (DE)
(72) Erfinder: HERLING, Jan, 99096 Erfurt (DE); BROLL, Wolfgang, 99084 Erfurt (DE)
(74) Vertreter: Engel, Christoph Klaus
(86) Internationale Anmeldenummer: PCT/EP2012/069161
(87) Internationale Veröffentlichungsnummer: WO 2014/048481

(56) Entgegenhaltungen:
- JAN HERLING AND WOLFGANG BROLL ED - FURHT B: "Markerless Tracking for Augmented Reality", 28. September 2011 (2011-09-28), HANDBOOK OF AUGMENTED REALITY, SPRINGER, PAGE(S) 255 - 272, XP009163652, ISBN: 978-1-4614-0063-9 das ganze Dokument
- MADJID MAIDI ET AL: "Markerless tracking for mobile augmented reality", SIGNAL AND IMAGE PROCESSING APPLICATIONS (ICSIPA), 2011 IEEE INTERNATIONAL CONFERENCE ON, IEEE, 16. November 2011 (2011-11-16), Seiten 301-306, XP032106857, DOI: 10.1109/ICSIPA.2011.6144077 ISBN: 978-1-4577-0243-3

## Beschreibung

Die vorliegende Erfindung betrifft ein Verfahren zum Bestimmen von Parametern einer Kamera, insbesondere zur so genannten Selbstkalibrierung der Kamera. Mit der Kamera wird eine Abbildung einer Umgebung aufgenommen, beispielsweise mit dem Ziel der Schaffung einer erweiterten Realität (Augmented Reality), nämlich zum perspektivisch angepassten Einfügen von synthetischen visuellen Objekten in die Abbildung der Umgebung. Im Weiteren betrifft die Erfindung eine Bildverarbeitungsanlage zum Bestimmen von Parametern einer Kamera.

In dem wissenschaftlichen Artikel von J. Herling und W. Broll: "An adaptive training-free feature tracker for mobile phones" in Proc. of VRST'10, Seiten 35-42, New York, 2010, ACM, wird ein Verfahren zur Bestimmung von Parametern einer Kamera eines Mobiltelefons gezeigt. Das Verfahren kann auf live aufgenommene Bewegtbildsequenzen angewendet werden und basiert auf der Bestimmung von SURF-Merkmalen.

Der wissenschaftliche Artikel von I. Gordon und D. G. Lowe: "What and where: 3d object recognition with accurate pose" in Toward Category-Level Object Recognition, Seiten 67-82, 2006, zeigt ein Verfahren zur Objekterkennung für die Schaffung einer erweiterten Realität.

In dem wissenschaftlichen Artikel von D. Wagner, G. Reitmayr, A. Mulloni, T. Drummond und D. Schmalstieg: "Pose tracking from natural features on mobile phones" in Proc. of ISMAR'08, Seiten 125-134, Washington, DC, USA, 2008, wird ein Verfahren zum Verfolgen der Bewegungen einer Kamera eines Mobiltelefons gezeigt, welches u. a. zur Schaffung einer erweiterten Realität verwendet werden kann.

Das Buchkapitel von Herling, J. und Broll, W.: "Markerless Tracking for Augmented Reality" in Handbook of Augmented Reality, Springer, ISBN 978-1-4614-0063-9, Seiten 255-272, 2011, gibt einen Überblick über Computer-Vision-basierte Verfahren zur Nachverfolgung innerhalb von Bildsequenzen für die Realisierung einer erweiterten Realität. Bei diesen Verfahren werden visuelle Merkmale in den Bildsequenzen detektiert, um die Ausrichtung der die Bildsequenzen aufnehmenden Kamera zu ermitteln. Im nächsten Schritt sind die in den Bildern der Bildsequenz korrespondierenden Merkmale zu bestimmen. Es ist insbesondere ein Verfahren beschrieben, bei welchem mithilfe des RANSAC-Algorithmus eine Teilmenge aus bereits bekannten Korrespondenzen entnommen wird, um eine dazu passende Kameraausrichtung zu berechnen.

Die Aufgabe der vorliegenden Erfindung besteht ausgehend vom Stand der Technik darin, den Aufwand zur Bestimmung von Kameraparametern bei einer Selbstkalibrierung zu verringern. Dies soll es beispielsweise ermöglichen, die Bewegungen einer Kamera eines Smartphones nachzuverfolgen, während der Nutzer das Smartphone zur Aufnahme einer Umgebung nutzt, wobei das aufgenommene Bild des Smartphones durch perspektivisch korrekt eingefügte synthetische visuelle Objekte ergänzt wird.

Die genannte Aufgabe wird gelöst durch ein Verfahren gemäß dem beigefügten Anspruch 1 und durch eine Bildverarbeitungsanlage gemäß dem beigefügten nebengeordneten Anspruch 14.

Das erfindungsgemäße Verfahren dient dem Bestimmen von Parametern einer Kamera. Die Parameter beschreiben beispielsweise den Ort und die Ausrichtung sowie die optischen Eigenschaften der Kamera. Das erfindungsgemäße Verfahren dient insbesondere der so genannten Selbstkalibrierung der Kamera, wodurch die Kameraparameter auf der Grundlage der von der Kamera aufgenommenen Bilder bestimmt werden. Mit der Kamera wird eine Abbildung einer Umgebung aufgenommen, beispielsweise mit dem Ziel der Schaffung einer erweiterten Realität, nämlich zum perspektivisch angepassten Einfügen von synthetischen visuellen Objekten in die Abbildung der Umgebung. Bei der Umgebung kann es sich um eine natürliche Umgebung handeln, welche mit der real vorhandenen Kamera aufgenommen wird. Grundsätzlich kann dieser Vorgang auch simuliert werden, indem eine synthetische Umgebung mit einer virtuellen Kamera aufgenommen wird.

In einem Schritt des erfindungsgemäßen Verfahrens wird eine dreidimensionale geometrische Beschreibung von visuellen Merkmalen der Umgebung bereitgestellt. Dies kann auf unterschiedliche Weise erfolgen. Beispielsweise kann eine natürliche Umgebung multiskopisch aufgenommen werden, um bestimmte Merkmale, wie Ecken oder Kanten zu extrahieren und deren dreidimensionale Anordnung zu bestimmen. Im Fall einer synthetischen Umgebung kann die dreidimensionale geometrische Beschreibung unmittelbar aus der Modellierung gewonnen werden. Auch kann die dreidimensionale Anordnung der visuellen Merkmale durch ein Vermessen der Umgebung mit Messgeräten oder Sensoren erfolgen. In jedem Fall sind im Ergebnis dieses Verfahrensschrittes mehrere visuelle Merkmale, wie Ecken, Kanten oder Blobs und deren räumliche Anordnung in der Umgebung bekannt. Die dreidimensionale geometrische Beschreibung der visuellen Merkmale gibt jeweils den Ort des jeweiligen visuellen Merkmales im Raum der Umgebung an. Im Übrigen sind die visuellen Merkmale jeweils zumindest dadurch beschrieben, dass sie existieren.

In einem weiteren Schritt des Verfahrens erfolgt die Aufnahme eines Bildes der Umgebung mit der Kamera. Bei dem Bild kann es sich um ein einzelnes Bild oder um eine Bildfolge, beispielsweise um ein Bewegtbild handeln. Die Kamera kann beispielsweise in ein Smartphone oder in einen Tablet-Computer integriert sein. Die Aufnahme des Bildes kann in einem zeitlichen Zusammenhang mit den weiteren Schritten des Verfahrens, aber auch zeitlich losgelöst davon erfolgen. So kann dieser Schritt beispielsweise auch dadurch gegeben sein, dass ein Spielfilm vorliegt, welcher mehrere mit einer Kamera aufgenommene Bilder einer natürlichen Umgebung umfasst.

Weiterhin erfolgt ein initiales Festlegen von Kameraparametern. Die Kameraparameter umfassen zumindest einen extrinsischen Parameter der Kamera. Die extrinsischen Parameter der Kamera beschreiben äußere Parameter, d. h. insbesondere Ort und Ausrichtung der Kamera. Der zumindest eine extrinsische Parameter kann beispielsweise durch eine Koordinate der Position der Kamera gebildet sein. Beim initialen Festlegen des mindestens einen Kameraparameters kann man sich beispielsweise an typischen oder zu erwartenden Anordnungen der Kamera orientieren. Auch können hierfür Sensoren an der Kamera genutzt werden.

In einem weiteren Schritt des erfindungsgemäßen Verfahrens wird ein Merkmalsdetektor auf das aufgenommene Bild angewendet, um visuelle Merkmale aus dem aufgenommenen Bild zu extrahieren. Bei den visuellen Merkmalen handelt es sich um Merkmale, die im Rahmen der Bildverarbeitung ermittelt werden können, beispielsweise um Ecken oder Kanten. Im Ergebnis dieses Schrittes sind mehrere visuelle Merkmale des Bildes und deren Position im Bild bekannt. In einem weiteren Schritt wird die Kamera auf der Grundlage der initial festgelegten Kameraparameter simuliert. Dabei wird ein Modell der Kamera mit den initial festgelegten Kameraparametern auf die dreidimensionale geometrische Beschreibung der visuellen Merkmale der Umgebung angewendet, sodass die visuellen Merkmale der Umgebung auf ein Merkmalsbild abgebildet werden. Es erfolgt somit eine Transformation der dreidimensionalen geometrischen Beschreibung der visuellen Merkmale auf das zweidimensionale Merkmalsbild unter Zugrundelegung der Kamera mit den initial festgelegten Kameraparametern.

Das Merkmalsbild und die aus dem Bild extrahierten visuellen Merkmale repräsentieren letztlich dieselben Informationen über die Umgebung. Jedoch wird sich die Anordnung der visuellen Merkmale im Merkmalsbild von der Anordnung der visuellen Merkmale im aufgenommenen Bild unterscheiden, da die initial festgelegten Kameraparameter in der Regel noch nicht genau die Kamera im Moment der Aufnahme des Bildes beschreiben, sondern eine Abweichung bestehen wird. Auch werden nicht alle der im Merkmalsbild vorhandenen visuellen Merkmale ein korrespondierendes visuelles Merkmal im aufgenommenen Bild aufweisen und umgekehrt. Erfindungsgemäß erfolgt ein Vergleichen einer Menge der aus dem Bild extrahierten visuellen Merkmale mit einer Menge der visuellen Merkmale im Merkmalsbild, um ein Maß der Übereinstimmung zwischen diesen beiden Mengen zu bestimmen. Es werden folglich nicht etwa unmittelbar korrespondierende Merkmale miteinander verglichen, sondern es werden Mengen von Merkmalen miteinander in ihrer jeweiligen Gesamtheit verglichen, welche zumindest mehrere korrespondierende Merkmale umfassen. Das Maß der Übereinstimmung kann beispielsweise durch eine Bestimmung der Summe quadrierter Abstandsmaße ermittelt werden.

Um die initial festgelegten Kameraparameter den tatsächlich bei der Kamera gegebenen Parametern anzunähern, werden die Kameraparameter in einem nächsten Schritt des erfindungsgemäßen Verfahrens verändert, wobei zunächst noch nicht bekannt ist, ob die Veränderung zu einer Annäherung an die tatsächlich bei der Kamera gegebenen Parameter führt. Im nächsten Schritt werden nun auch die veränderten Kameraparameter auf die dreidimensionale geometrische Beschreibung der visuellen Merkmale der Umgebung angewendet, indem die Kamera mit den veränderten Kameraparametern simuliert wird. Hierdurch werden die visuellen Merkmale der Umgebung auf ein weiteres Merkmalsbild abgebildet. Es erfolgt nun ein Vergleichen einer Menge der aus dem Bild extrahierten visuellen Merkmale mit einer Menge der visuellen Merkmale im weiteren Merkmalsbild, um das Maß der Übereinstimmung zwischen diesen beiden Mengen zu bestimmen. Erfindungsgemäß werden die Schritte des Veränderns der Kameraparameter, des Anwendens der veränderten Kameraparameter und des Vergleichens der Mengen so oft wiederholt, bis das jeweilig ermittelte Maß der Übereinstimmung einen Grenzwert überschritten hat. Die Kameraparameter werden somit immer wieder ohne Kenntnis der Auswirkung verändert und zwar mit dem Ziel, eine Annäherung an die tatsächlich gegebenen Kameraparametern zu bewirken. Die einzelnen Zyklen stellen also Versuche dar, deren Auswirkung erst durch die Bestimmung des Maßes der Übereinstimmung ermittelt wird. Im einfachsten Fall beendet man das wiederholte Verändern und Anwenden der Kameraparameter sowie das wiederholte Vergleichen der Mengen und das wiederholte Bestimmen des Maßes der Übereinstimmung nachdem dieses Maß den Grenzwert überschritten hat, wobei die zuletzt veränderten Kameraparameter die ermittelten Kameraparameter für das Bild darstellen.

Ein besonderer Vorteil des erfindungsgemäßen Verfahrens besteht darin, dass die Kameraparameter auf besonders effektive Weise ermittelt werden können, sodass das Verfahren beispielsweise auf einem Smartphone in Realzeit durchgeführt werden kann. Die besondere Effektivität des Verfahrens liegt darin begründet, dass lediglich Mengen von visuellen Merkmalen verglichen werden, wobei einzelne Korrespondenzen außer Acht bleiben können und auch weitere visuelle Eigenschaften unberücksichtigt bleiben können. Letztlich bedarf es nur eines Vergleiches zweier Punktwolken, welche jeweils die Anordnung der visuellen Merkmale repräsentieren, was besonders effektiv erfolgen kann.

Besonders bevorzugt wird das Verfahren bei der Aufnahme von natürlichen Umgebungen angewendet, um beispielsweise eine erweiterte Realität zu schaffen. In diesem Fall ist die Umgebung durch eine natürliche Umgebung gebildet und gleichzeitig ist die Kamera durch eine real existierende Kamera gebildet. Alternativ ist das erfindungsgemäße Verfahren auch auf synthetisierte Umgebungen anwendbar. In diesem Fall ist die Umgebung durch eine synthetisierte Umgebung gebildet, die durch eine virtuelle Kamera aufgenommen wird. In diesem Fall werden die Umgebung und die Aufnahme durch die Kamera simuliert. Wenngleich das erfindungsgemäße Verfahren eine Selbstkalibrierung der Kamera ermöglicht, kann das Bestimmen der Kameraparameter durch Sensoren oder andere Messeinrichtungen unterstützt werden. Beispielsweise können hierfür GPS-Sensoren oder optische Sensoren genutzt werden.

Bei besonders bevorzugten Ausführungsformen des erfindungsgemäßen Verfahrens werden beim Vergleichen der Menge der aus dem Bild extrahierten visuellen Merkmale mit der Menge der visuellen Merkmale im Merkmalsbild die absoluten und relativen Positionen der einzelnen visuellen Merkmale im Bild verglichen. Es erfolgt somit ein Vergleich von Punktwolken im Zweidimensionalen, wofür effiziente Algorithmen angewendet werden können. Dabei bleibt die visuelle Erscheinung der Merkmale und deren Umgebung bevorzugt unberücksichtigt. Folglich werden bevorzugt beim Vergleichen der Menge der aus dem Bild extrahierten visuellen Merkmale mit der Menge der visuellen Merkmale im Merkmalsbild außer den visuellen Merkmalen als solchen weitere visuelle Eigenschaften nicht berücksichtigt. Die visuellen Merkmale als solche umfassen jeweils die Information über die Existenz des visuellen Merkmals, beispielsweise einer Kante oder einer Ecke, deren Ort im Bild und ggf. ein Maß der Verlässlichkeit der Detektion des Merkmales. Hingegen werden bevorzugt weitere visuelle Eigenschaften, wie beispielsweise die Farbe des visuellen Merkmales oder die Farbe in der Umgebung des visuellen Merkmals nicht berücksichtigt. Ein besonderer Vorteil des erfindungsgemäßen Verfahrens besteht gerade darin, dass auf die Berücksichtigung weiterer visueller Eigenschaften verzichtet werden kann, da bereits der Ansatz des Vergleichens von Mengen der visuellen Merkmale und des wiederholten Veränderns der Kameraparameter zu befriedigenden Resultaten führt.

Das Verändern der Kameraparameter erfolgt bevorzugt zufällig und innerhalb von definierten Grenzen. Auch können jeweils nur einzelne der Kameraparameter verändert werden, wie beispielsweise nur zwei der drei Koordinaten des Ortes der Kamera. Auch können jeweils sämtliche der Kameraparameter geändert werden oder die einzelnen Kameraparameter werden alternierend verändert. Alternativ zum zufälligen Verändern können die Kameraparameter auch schrittweise in vordefinierte Richtungen verändert werden. Jedenfalls erfolgt das Verändern der Kameraparameter ohne a-priori-Kenntnis der Auswirkung.

Die Grenzen, in welchen die Kameraparameter zufällig verändert werden, werden bevorzugt verringert, wenn das wiederholt ermittelte Maß der Übereinstimmung größer als das zuvor ermittelte Maß der Übereinstimmung ist. Somit verändert man die Kameraparameter geringfügiger, wenn man sich den bei der Kamera tatsächlich gegebenen Parametern nähert.

Bei einfachen Ausführungsformen des erfindungsgemäßen Verfahrens werden die zuletzt veränderten Kameraparameter unmittelbar ausgegeben und für nachfolgende Anwendungen, wie beispielsweise für das Einfügen von synthetischen visuellen Objekten verwendet. Bevorzugt werden die ermittelten Kameraparameter jedoch noch angepasst, um die Genauigkeit der Kameraparameter weiter zu erhöhen. Hierfür erfolgt bevorzugt zunächst ein Schritt, bei welchem einige der im Bild extrahierten visuellen Merkmale ausgewählt werden, welche mindestens einen unteren Grenzwert eines Maßes der Verlässlichkeit der Detektion des visuellen Merkmales aufweisen. Es werden somit nur solche der extrahierten visuellen Merkmale ausgewählt, deren Detektion mit ausreichender Sicherheit erfolgte. Weiterhin erfolgt ein Auswählen derjenigen visuellen Merkmale im zuletzt ermittelten Merkmalsbild, welche mit den ausgewählten der im Bild extrahierten visuellen Merkmale korrespondieren. Im Ergebnis liegen somit detektierte Merkmalskorrespondenzen vor, die mit hoher Wahrscheinlichkeit tatsächlich vorhandene Übereinstimmungen repräsentieren. Im nächsten Schritt erfolgt ein Vergleichen der geometrischen Anordnung der ausgewählten der im Bild extrahierten visuellen Merkmale mit der geometrischen Anordnung der korrespondierenden der visuellen Merkmale im zuletzt ermittelten Merkmalsbild, um die zuvor ermittelten Kameraparameter anzupassen und so deren Genauigkeit zu erhöhen. In diesem Anpassungsschritt werden somit nicht mehr lediglich Mengen von Merkmalen miteinander verglichen, sondern es erfolgt ein Vergleich von korrespondierenden Merkmalspaaren. Im Ergebnis führt das Anwenden der angepassten Kameraparameter auf die dreidimensionale geometrische Beschreibung der visuellen Merkmale der Umgebung zu einem die visuellen Merkmale der Umgebung abbildenden angepassten Merkmalsbild. Bei diesem angepassten Merkmalsbild gleicht die Anordnung der korrespondierenden der visuellen Merkmale der geometrischen Anordnung der ausgewählten der im Bild extrahierten visuellen Merkmale, sodass die angepassten Kameraparameter den bei der Kamera tatsächlich gegebenen Parametern weitestgehend gleichen. Das Anpassen der Kameraparameter erfolgt bevorzugt durch eine nichtlineare Optimierung, beispielsweise durch eine Not-Linear-Least-Squares-Optimierung.

Die Menge der aus dem Bild extrahierten visuellen Merkmale stellt bevorzugt eine echte Teilmenge der aus dem Bild extrahierten visuellen Merkmale dar. Dabei wird die echte Teilmenge der aus dem Bild extrahierten visuellen Merkmale bevorzugt dadurch ermittelt, dass diejenigen der extrahierten visuellen Merkmale ausgewählt werden, welche einen unteren Grenzwert für ein Maß der Verlässlichkeit nicht unterschreiten. Hierdurch werden unsicher detektierte Merkmale nicht berücksichtigt. Weiterhin wird die echte Teilmenge der aus dem Bild extrahierten visuellen Merkmale bevorzugt dadurch ermittelt, dass diejenigen der extrahierten visuellen Merkmale aussortiert werden, welche aufgrund geometrischer Bedingungen nicht mit visuellen Merkmalen im Merkmalsbild übereinstimmen können. Dadurch werden extrahierte visuelle Merkmale aussortiert, welche aufgrund geometrischer Randbedingungen keine Korrespondenz im Merkmalsbild haben können.

Die Menge der visuellen Merkmale im Merkmalsbild ist bevorzugt durch eine echte Teilmenge der visuellen Merkmale im Merkmalsbild gebildet. Die echte Teilmenge der visuellen Merkmale im Merkmalsbild wird bevorzugt dadurch ermittelt, dass diejenigen der visuellen Merkmale im Merkmalsbild ausgewählt werden, welche einen unteren Grenzwert für ein Maß der Verlässlichkeit nicht unterschreiten. Hierdurch werden solche Merkmale im Merkmalsbild aussortiert, welche nicht zuverlässig ermittelt wurden. Weiterhin wird die echte Teilmenge der visuellen Merkmale im Merkmalsbild bevorzugt dadurch ermittelt, dass diejenigen der visuellen Merkmale im Merkmalsbild aussortiert werden, welche aufgrund geometrischer Bedingungen nicht mit den aus dem Bild extrahierten visuellen Merkmalen übereinstimmen können. Somit werden solche der visuellen Merkmale im Merkmalsbild aussortiert, die im aufgenommenen Bild nicht dargestellt sein können.

Die bereitgestellte Beschreibung der visuellen Merkmale der Umgebung beschreibt bevorzugt derartige visuelle Merkmale, wie sie mit dem gewählten Merkmalsdetektor detektierbar sind. Folglich sind die Merkmale im Merkmalsbild und die extrahierten Merkmale des aufgenommenen Bildes von der gleichen Art, beispielsweise grundsätzlich eine Kante. Durch die Gleichartigkeit der Merkmale im Merkmalsbild und der aus dem Bild extrahierten Merkmale können diese miteinander verglichen werden.

Das Bereitstellen der dreidimensionalen geometrischen Beschreibung von visuellen Merkmalen der Umgebung kann beispielsweise dadurch erfolgen, dass mehrere Bilder der Umgebung aus unterschiedlichen Perspektiven aufgenommen werden und anschließend der Merkmalsdetektor auf diese Bilder angewendet wird. Da die Bilder der Umgebung aus unterschiedlichen Perspektiven aufgenommen wurden, können die Merkmale räumlich zugeordnet werden. Die aus unterschiedlichen Perspektiven aufgenommenen Bilder der Umgebung können gleichzeitig oder zeitlich nacheinander aufgenommen werden.

Das erfindungsgemäße Verfahren zeichnet sich dadurch aus, dass die initial festgelegten Kameraparameter wiederholt verändert werden, bis sie den tatsächlich gegebenen Kameraparametern in einem genügenden Maße ähneln oder gleichen. Bei bevorzugten Ausführungsformen des erfindungsgemäßen Verfahrens wird dieser Zyklus mehrfach durchlaufen, sodass die ermittelten Kameraparameter mehrfach vorliegen und die den tatsächlichen Kameraparametern am nächsten kommenden Kameraparameter als ermittelte Kameraparameter ausgewählt werden können. Hierfür werden die Schritte des wiederholten Veränderns der Kameraparameter beginnend bei den initial festgelegten Kameraparametern, des wiederholten Anwendens der veränderten Kameraparameter auf die dreidimensionale geometrische Beschreibung der visuellen Merkmale der Umgebung und des wiederholten Vergleichens einer Menge der aus dem Bild extrahierten visuellen Merkmale mit einer Menge der visuellen Merkmale im weiteren Merkmalsbild bis zum Überschreiten eines Grenzwertes durch das ermittelte Maß der Übereinstimmung mehrfach durchgeführt. Dabei werden diejenigen der jeweils zuletzt veränderten Kameraparameter als ermittelte Kameraparameter für das Bild ausgewählt, für welche das ermittelte Maß der Übereinstimmung den Grenzwert am meisten übersteigt. Die mehrfach wiederholten Schritte, d. h. die einzelnen Zyklen werden bevorzugt zeitlich parallel ausgeführt, beispielsweise auf einem Mehrprozessorsystem.

Bei dem Merkmalsdetektor kann es sich um einen weitgehend beliebigen aus der Bildverarbeitung bekannten Merkmalsdetektor handeln. Der Merkmalsdetektor ist bevorzugt zum Detektieren von Ecken, Kanten, Texturmustern und/oder Blobs ausgebildet. Insbesondere kann es sich um FAST-Merkmale, Harris-Ecken, SURF-Merkmale oder SIFT-Merkmale handeln.

Das erfindungsgemäße Verfahren wird bevorzugt auf ein Bewegtbild angewendet. Dabei bildet das genannte aufgenommene Bild ein erstes Bild der Bewegtbildfolge. Weiterhin wird mindestens ein zweites Bild der Umgebung mit der Kamera aufgenommen. Der Merkmalsdetektor wird auf das zweite Bild angewendet, um visuelle Merkmale aus dem zweiten Bild zu extrahieren. Die für das erste Bild ermittelten Kameraparameter werden nun auf die dreidimensionale geometrische Beschreibung der visuellen Merkmale der Umgebung angewendet, um die visuellen Merkmale der Umgebung auf ein Merkmalsbild abzubilden. Folglich bilden die für das erste Bild ermittelten Kameraparameter die für das zweite Bild initial festzulegenden Kameraparameter. In den meisten Fällen werden die für das erste Bild ermittelten Kameraparameter den während der Aufnahme des zweiten Bildes tatsächlich gegebenen Kameraparametern weit ähnlicher sein, als die initial festgelegten Kameraparameter den bei der Aufnahme des ersten Bildes gegebenen Kameraparametern. Weiterhin erfolgt ein Vergleichen einer Menge der aus dem zweiten Bild extrahierten visuelle Merkmale mit einer Menge der visuellen Merkmale im zuletzt ermittelten Merkmalsbild um ein Maß der Übereinstimmung zwischen diesen beiden Mengen zu bestimmen. In gleicher Weise wie bei dem ersten Bild erfolgt nun ein Verändern der Kameraparameter und ein Anwenden der veränderten Kameraparameter auf die dreidimensionale geometrische Beschreibung der visuellen Merkmale der Umgebung, um die visuellen Merkmale der Umgebung auf ein weiteres Merkmalsbild abzubilden. Eine Menge der aus dem zweiten Bild extrahierten visuellen Merkmale wird mit einer Menge der Merkmale im weiteren Merkmalsbild verglichen, um das Maß der Übereinstimmung zwischen diesen beiden Mengen zu bestimmen. In gleicher Weise wie bei dem ersten Bild werden die Schritte des Veränderns der Kameraparameter, des Anwendens der veränderten Kameraparameter und des Vergleichens der Mengen so oft wiederholt, bis das ermittelte Maß der Übereinstimmung einen Grenzwert überschritten hat. Dabei stellen die zuletzt veränderten Kameraparameter die ermittelten Kameraparameter für das zweite Bild dar.

Bei bevorzugten Ausführungsformen umfasst das Bewegtbild neben dem ersten Bild und dem zweiten Bild eine Mehrzahl weiterer folgender Bilder, für welche jeweils die für das zweite Bild angegebenen Schritte unter der Maßgabe durchgeführt werden, dass das erste Bild durch das vorherige Bild gebildet ist. Es werden also immer die für das vorherige Bild ermittelten Kameraparameter zur Initialisierung genutzt.

Die für das aufgenommene Bild bevorzugt auszuführenden Verfahrensschritte sind auch für das zweite Bild und die weiteren Bilder bevorzugt auszuführen.

Bei einer Bewegtbildfolge können sich die Kameraparameter zeitlich ändern, insbesondere dann, wenn die Kamera bewegt wird oder beispielsweise die Brennweite verändert wird. Dies führt letztlich dazu, dass die Umgebung aus unterschiedlichen Perspektiven aufgenommen wird, sodass das Bereitstellen der dreidimensionalen geometrischen Beschreibung von visuellen Merkmalen der Umgebung auf der Grundlage der aufgenommenen Bilder erfolgen kann. Dies ermöglicht ein fortgesetztes Bereitstellen der dreidimensionalen geometrischen Beschreibung der visuellen Merkmale der Umgebung, beispielsweise um weitere visuelle Merkmale der Umgebung zu beschreiben oder um die Genauigkeit der Beschreibung zu erhöhen. Grundsätzlich können die Schritte des Bereitstellens der dreidimensionalen geometrischen Beschreibung der visuellen Merkmale der Umgebung und die Schritte zum Aufnehmen des ersten Bildes, des zweiten Bildes und der weiteren Bilder miteinander verschachtelt sein.

Ab dem zweiten Bild können die für das jeweils vorangegangene Bild ermittelten Informationen genutzt werden; zumindest zum Initialisieren der Kameraparameter. Weiterhin können auch Informationen über die extrahierten visuellen Merkmale aus dem vorangegangenen Bild genutzt werden. Bevorzugt werden solche der extrahierten visuellen Merkmale auch für das jeweils folgende Bild genutzt, die mit einer hohen Verlässlichkeit ermittelt wurden. Daher stimmt die zum Vergleichen verwendete Menge der aus dem zweiten Bild extrahierten visuellen Merkmale mit der Menge der aus dem ersten Bild extrahierten visuellen Merkmale bevorzugt überein, wenn die im ersten Bild extrahierten visuellen Merkmale mindestens einen ersten unteren Grenzwert eines Maßes der Verlässlichkeit aufweisen. Es wird jedoch vorkommen, dass einige der extrahierten visuellen Merkmale nicht die erforderliche Verlässlichkeit aufweisen. Dann umfasst die zum Vergleichen verwendete Menge der aus dem zweiten Bild extrahierten visuellen Merkmale bevorzugt nur einen Teil der Menge der aus dem ersten Bild extrahierten visuellen Merkmale, wenn die im ersten Bild extrahierten visuellen Merkmale zumindest einen zweiten unteren Grenzwert des Maßes der Verlässlichkeit aufweisen. Dabei ist der zweite untere Grenzwert geringer als der erste untere Grenzwert.

Das auf eine Bewegtbildfolge angewendete erfindungsgemäße Verfahren wird bevorzugt in Realzeit ausgeführt, sodass es für die Schaffung einer erweiterten Realität geeignet ist.

Die Kameraparameter umfassen bevorzugt mehrere der extrinsischen Parameter zur Beschreibung der Ausrichtung der Kamera. Beispielsweise können die extrinsischen Parameter durch zwei Winkel gebildet sein, welche Schwenkbewegungen und Neigebewegungen der Kamera beschreiben. Bevorzugt umfassen die Kameraparameter weitere der extrinsischen Parameter zur Beschreibung der räumlichen Position der Kamera. Beispielsweise können die Kameraparameter drei Koordinaten als extrinsische Parameter zur vollständigen Beschreibung der räumlichen Position der Kamera umfassen.

Bei bevorzugten Ausführungsformen des erfindungsgemäßen Verfahrens umfassen die Kameraparameter neben den extrinsischen Parametern auch intrinsische Kameraparameter. Die intrinsischen Kameraparameter, d. h. die inneren Kameraparameter beschreiben insbesondere die optische Abbildung in der Kamera. Bevorzugt umfassen die intrinsischen Kameraparameter zumindest eine Brennweite der Kamera.

Die Auswahl der Kameraparameter ist bevorzugt der Art der Kamera und der jeweiligen Anwendung angepasst. Insofern beispielsweise die Kamera eines Smartphones oder eines Tablet-Computers verwendet wird, umfassen die Kameraparameter bevorzugt alle sechs extrinsischen Kameraparameter, wohingegen auf intrinsische Parameter ggf. verzichtet werden kann.

Die erfindungsgemäße Bildverarbeitungsanlage ist zur Ausführung des erfindungsgemäßen Verfahrens ausgebildet. Bevorzugte Ausführungsformen der erfindungsgemäßen Bildverarbeitungsanlage sind zur Ausführung bevorzugter Ausführungsformen des erfindungsgemäßen Verfahrens ausgebildet.

Die Bildverarbeitungsanlage ist bevorzugt durch einen Computer, durch einen Tablet-Computer oder durch ein Smartphone gebildet.

Weitere Einzelheiten der Erfindung ergeben sich aus der nachfolgenden Beschreibung mehrerer Prinzipdarstellungen in der Zeichnung. Es zeigen:
- Fig. 1:: aus einem aufgenommenen Bild extrahierte visuelle Merkmale und ein Merkmalsbild in einer überlagerten Darstellung;
- Fig. 2:: die in Fig. 1 gezeigte Darstellung, nachdem Kameraparameter verändert wurden;
- Fig. 3:: die in Fig. 2 gezeigte Darstellung, nachdem die Kameraparameter nochmals verändert wurden; und
- Fig. 4:: die in Fig. 3 gezeigte Darstellung, nachdem die Kameraparameter abermals verändert wurden.

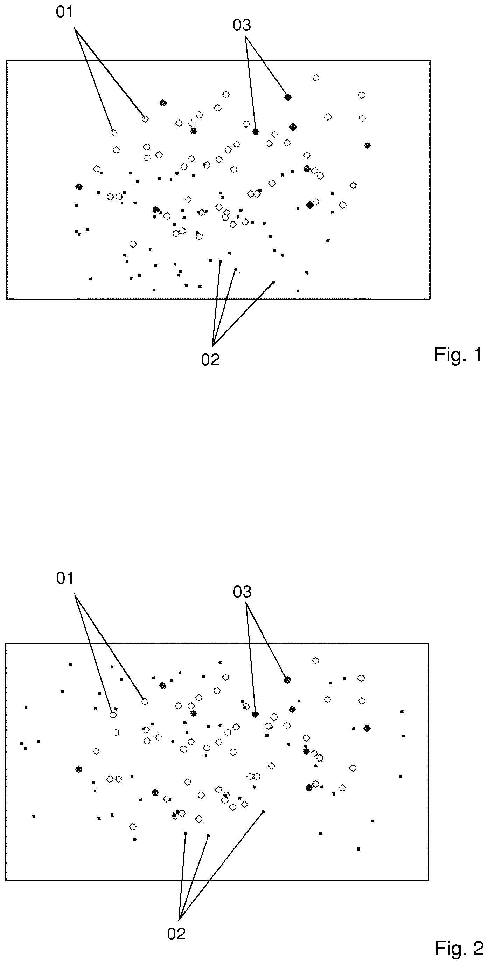

Fig. 1 zeigt eine zweidimensionale Darstellung von visuellen Merkmalen 01, welche aus einem Bild extrahiert wurden, welches zuvor mit einer Kamera aufgenommen wurde. Die extrahierten visuellen Merkmale 01 sind durch Kreise symbolisiert. Bei den extrahierten visuellen Merkmalen 01 kann es sich beispielsweise um Ecken oder Kanten handeln, die im aufgenommenen Bild extrahiert wurden.

Der zweidimensionalen Darstellung der extrahierten visuellen Merkmale 01 ist zur Veranschaulichung ein Merkmalsbild überlagert, welches abgebildete visuelle Merkmale 02 umfasst. Das Merkmalsbild ist das Resultat der Anwendung von initial festgelegten Kameraparametern auf eine dreidimensionale geometrische Beschreibung der visuellen Merkmale derjenigen Umgebung, welche mit der Kamera aufgenommen wurde. Die aus dem aufgenommenen Bild extrahierten visuellen Merkmale 01 und die visuellen Merkmale 02 des Merkmalsbildes sind von der gleichen Art, sodass es sich beispielsweise immer um Kanten handelt. Insofern die initial festgelegten Kameraparameter den bei der Aufnahme des Bildes tatsächlich gegebenen Kameraparametern bereits gleichen würden, so würden die extrahierten visuellen Merkmale 01 und die visuellen Merkmale 02 des Merkmalsbildes deckungsgleich aufeinander abgebildet werden.

Das Ermitteln von visuellen Merkmalen in einem aufgenommenen Bild erfolgt nur mit einer begrenzten Verlässlichkeit. Daher kommt es immer auch zu fehlerhaft ermittelten Merkmalen 03, welche durch ausgefüllte Kreise symbolisiert sind.

Fig. 2 zeigt die in Fig. 1 gezeigte Darstellung, nachdem die intial festgelegten Kameraparameter verändert wurden und ein weiteres Merkmalsbild abgebildet wurde. Mehrere der Kameraparameter, wie beispielsweise die Ausrichtung oder die Position wurden hierfür zufällig verändert. Die Veränderung führte dazu, dass die Ausrichtung gemäß den veränderten Kameraparametern an die tatsächliche Ausrichtung der Kamera bei der Aufnahme des Bildes angenähert wurde, wohingegen die Positionsparameter deutlich von der Position der Kamera während der Aufnahme des ersten Bildes abweichen.

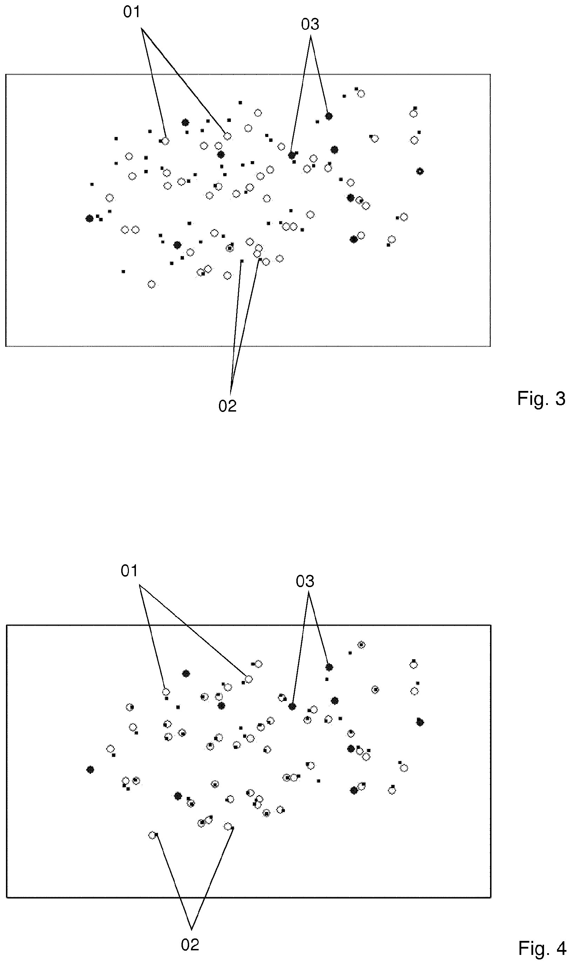

Fig. 3 zeigt die in Fig. 2 gezeigte Darstellung, nachdem die Kameraparameter nochmals verändert wurden und ein weiteres Merkmalsbild bestimmt wurde. Insbesondere wurden die Positionsparameter verändert, sodass diese näher an die Position der bei der Aufnahme des Bildes verwendeten Kamera heranreichen. Wie in Fig. 3 zu erkennen ist, befinden sich mehrere der Merkmale 02 des Merkmalsbildes bereits in der Nähe mehrerer der aus dem Bild extrahierten visuellen Merkmale 01.

Fig. 4 zeigt die in Fig. 3 gezeigte Darstellung, nachdem die Kameraparameter abermals verändert wurden, sodass die Merkmale 02 des weiteren Merkmalsbildes überwiegend mit den aus dem Bild extrahierten visuellen Merkmalen 01 in Übereinstimmung gebracht wurden. Die abermals veränderten Kameraparameter stellen damit eine ausreichende Annäherung an die bei der Aufnahme des Bildes tatsächlich gegebenen Kameraparameter dar, sodass sie das Ergebnis des erfindungsgemäßen Verfahrens darstellen.

### Bezugszeichenliste

- 01: - aus dem aufgenommenen Bild extrahierte visuelle Merkmale
- 02: - im Merkmalsbild abgebildete visuelle Merkmale
- 03: - fehlerhaft extrahierte visuelle Merkmale

## Patentansprüche

1. Verfahren zum Bestimmen von Parametern einer Kamera, mit welcher eine Abbildung einer Umgebung aufgenommen wird, wobei das Verfahren folgende Schritte umfasst:
- Bereitstellen einer dreidimensionalen geometrischen Beschreibung von visuellen Merkmalen (02) der Umgebung;
- initiales Festlegen von Kameraparametern, welche zumindest einen extrinsischen Parameter der Kamera umfassen;
- Aufnahme eines Bildes der Umgebung mit der Kamera;
- Anwenden eines Merkmalsdetektors auf das Bild, um visuelle Merkmale (01) zu extrahieren;
- Anwenden der initial festgelegten Kameraparameter auf die dreidimensionale geometrische Beschreibung der visuellen Merkmale (02) der Umgebung, um die visuellen Merkmale (02) der Umgebung auf ein Merkmalsbild abzubilden;
- Vergleichen, anhand der Positionen der Merkmale im Bild, einer Menge der aus dem Bild extrahierten visuellen Merkmale (01) mit einer Menge der visuellen Merkmale (02) im Merkmalsbild, um ein Maß der Übereinstimmung zwischen den beiden Mengen zu bestimmen;
- Verändern der Kameraparameter und Anwenden der veränderten Kameraparameter auf die dreidimensionale geometrische Beschreibung der visuellen Merkmale (02) der Umgebung, um die visuellen Merkmale (02) der Umgebung auf ein weiteres Merkmalsbild abzubilden; und
- Erneutes Vergleichen, anhand der Positionen der Merkmale im Bild, einer Menge der aus dem Bild extrahierten visuellen Merkmale (01) mit einer Menge der visuellen Merkmale (02) im weiteren Merkmalsbild, um das Maß der Übereinstimmung zwischen den beiden Mengen zu ermitteln, wobei die Schritte des Veränderns der Kameraparameter, des Anwendens der veränderten Kameraparameter und des Vergleichens der Mengen so oft wiederholt werden, bis das ermittelte Maß der Übereinstimmung einen Grenzwert überschritten hat, sodass dann die veränderten Kameraparameter die ermittelten Kameraparameter für das Bild darstellen.

2. Verfahren nach Anspruch 1, **dadurch gekennzeichnet, dass** die Umgebung durch eine natürliche Umgebung gebildet ist und dass die Kamera durch eine reale Kamera gebildet ist.

3. Verfahren nach Anspruch 1 oder 2, **dadurch gekennzeichnet, dass** beim Vergleichen der Menge der aus dem Bild extrahierten visuellen Merkmale (01) mit der Menge der visuellen Merkmale (02) im Merkmalsbild die absoluten und relativen Positionen der einzelnen visuellen Merkmale (01, 02) verglichen werden.

4. Verfahren nach Anspruch 3, **dadurch gekennzeichnet, dass** beim Vergleichen der Menge der aus dem Bild extrahierten visuellen Merkmale (01) mit der Menge der visuellen Merkmale (02) im Merkmalsbild außer den visuellen Merkmalen (01, 02) als solchen weitere visuelle Eigenschaften unberücksichtigt bleiben.

5. Verfahren nach einem der Ansprüche 1 bis 4, **dadurch gekennzeichnet, dass** das Verändern der Kameraparameter zufällig und innerhalb von Grenzen erfolgt.

6. Verfahren nach Anspruch 5, **dadurch gekennzeichnet, dass** die Grenzen für die Änderungen der zu verändernden Kameraparameter verringert werden, wenn das wiederholt ermittelte Maß der Übereinstimmung größer als das zuvor ermittelte Maß der Übereinstimmung ist.

7. Verfahren nach einem der Ansprüche 1 bis 6, **dadurch gekennzeichnet, dass** die Menge der aus dem Bild extrahierten visuellen Merkmale (01) eine echte Teilmenge der aus dem Bild extrahierten visuellen Merkmale (01) ist, wobei die echte Teilmenge der aus dem Bild extrahierten visuellen Merkmale (01) dadurch ermittelt wird, dass diejenigen der extrahierten visuellen Merkmale (01) ausgewählt werden, welche einen unteren Grenzwert für ein Maß der Verlässlichkeit nicht unterschreiten.

8. Verfahren nach einem der Ansprüche 1 bis 7, **dadurch gekennzeichnet, dass** die bereitgestellte Beschreibung der visuellen Merkmale (02) der Umgebung derartige visuelle Merkmale beschreibt, wie sie mit dem Merkmalsdetektor detektierbar sind.

9. Verfahren nach Anspruch 8, **dadurch gekennzeichnet, dass** das Bereitstellen der dreidimensionalen geometrischen Beschreibung von visuellen Merkmalen (02) der Umgebung dadurch erfolgt, dass der Merkmalsdetektor auf mehrere aus unterschiedlichen Perspektiven aufgenommene Bilder der Umgebung angewendet wird.

10. Verfahren nach einem der Ansprüche 1 bis 9, **dadurch gekennzeichnet, dass** die Schritte des wiederholten Veränderns der Kameraparameter beginnend bei den inital festgelegten Kameraparametern, des wiederholten Anwendens der veränderten Kameraparameter auf die dreidimensionale geometrische Beschreibung der visuellen Merkmale (02) der Umgebung und des wiederholten Vergleichens einer Menge der aus dem Bild extrahierten visuellen Merkmale (01) mit einer Menge der visuellen Merkmale (02) im weiteren Merkmalsbild bis zum Überschreiten eines Grenzwertes durch das ermittelte Maß der Übereinstimmung mehrfach durchgeführt werden, wobei diejenigen der jeweils zuletzt veränderten Kameraparameter als ermittelte Kameraparameter für das Bild ausgewählt werden, für welche das ermittelte Maß der Übereinstimmung den Grenzwert am meisten übersteigt.

11. Verfahren nach einem der Ansprüche 1 bis 10, **dadurch gekennzeichnet, dass** es auf ein Bewegtbild angewendet wird, wobei das aufgenommene Bild ein erstes Bild bildet und wobei das Verfahren folgende weitere Schritte umfasst:
- Aufnahme eines zweiten Bildes der Umgebung mit der Kamera;
- Anwenden des Merkmalsdetektors auf das zweite Bild, um visuelle Merkmale (01) zu extrahieren;
- Anwenden der für das erste Bild ermittelten Kameraparameter auf die dreidimensionale geometrische Beschreibung der visuellen Merkmale (02) der Umgebung, um die visuellen Merkmale (02) der Umgebung auf ein Merkmalsbild abzubilden;
- Vergleichen einer Menge der aus dem zweiten Bild extrahierten visuellen Merkmale (01) mit einer Menge der visuellen Merkmale (02) im Merkmalsbild, um ein Maß der Übereinstimmung zwischen den beiden Mengen zu bestimmen;
- Verändern der Kameraparameter und Anwenden der veränderten Kameraparameter auf die dreidimensionale geometrische Beschreibung der visuellen Merkmale (02) der Umgebung, um die visuellen Merkmale (02) der Umgebung auf ein weiteres Merkmalsbild abzubilden; und
- Vergleichen einer Menge der aus dem zweiten Bild extrahierten visuellen Merkmale (01) mit einer Menge der visuellen Merkmale (02) im weiteren Merkmalsbild, um das Maß der Übereinstimmung zwischen den beiden Mengen zu bestimmen, wobei die Schritte des Veränderns der Kameraparameter, des Anwendens der veränderten Kameraparameter und des Vergleichens der Mengen so oft wiederholt werden, bis das ermittelte Maß der Übereinstimmung einen Grenzwert überschritten hat, sodass dann die zuletzt veränderten Kameraparameter die ermittelten Kameraparameter für das zweite Bild darstellen.

12. Verfahren nach Anspruch 11, **dadurch gekennzeichnet, dass** das Bewegtbild neben dem ersten Bild und dem zweiten Bild eine Mehrzahl weiterer folgender Bilder umfasst, für welche jeweils die für das zweite Bild angegebenen Schritte unter der Maßgabe durchgeführt werden, dass das erste Bild durch das jeweils vorherige Bild gebildet ist.

13. Verfahren nach einem auf Anspruch 9 rückbezogenen Anspruch 12, **dadurch gekennzeichnet, dass** die aus unterschiedlichen Perspektiven aufgenommenen Bilder der Umgebung durch mehrere der Bilder des Bewegtbildes gebildet sind.

14. Bildverarbeitungsanlage, die zur Ausführung des Verfahrens nach einem der Ansprüche 1 bis 13 ausgebildet ist, wobei die Anlage folgende Mittel aufweist:
- Mittel zum Bereitstellen einer dreidimensionalen geometrischen Beschreibung von visuellen Merkmalen (02) der Umgebung;
- Kamera zur Aufnahme eines Bildes der Umgebung;
- Mittel zum initialen Festlegen von Kameraparametern, welche zumindest einen extrinsischen Parameter der Kamera umfassen;
- Merkmalsdetektor, um visuelle Merkmale (01) aus dem Bild zu extrahieren;
- Mittel zum Anwenden der initial festgelegten Kameraparameter auf die dreidimensionale geometrische Beschreibung der visuellen Merkmale (02) der Umgebung, um die visuellen Merkmale (02) der Umgebung auf ein Merkmalsbild abzubilden;
- Mittel zum Vergleichen, anhand der Positionen der Merkmale im Bild, einer Menge der aus dem Bild extrahierten visuellen Merkmale (01) mit einer Menge der visuellen Merkmale (02) im Merkmalsbild, um ein Maß der Übereinstimmung zwischen den beiden Mengen zu bestimmen;
- Mittel zum Verändern der Kameraparameter und zum Anwenden der veränderten Kameraparameter auf die dreidimensionale geometrische Beschreibung der visuellen Merkmale (02) der Umgebung, um die visuellen Merkmale (02) der Umgebung auf ein weiteres Merkmalsbild abzubilden; und
- Mittel zum erneuten Vergleichen, anhand der Positionen der Merkmale im Bild, einer Menge der aus dem Bild extrahierten visuellen Merkmale (01) mit einer Menge der visuellen Merkmale (02) im weiteren Merkmalsbild, um das Maß der Übereinstimmung zwischen den beiden Mengen zu ermitteln, wobei die Schritte des Veränderns der Kameraparameter, des Anwendens der veränderten Kameraparameter und des Vergleichens der Mengen so oft wiederholt werden, bis das ermittelte Maß der Übereinstimmung einen Grenzwert über schritten hat, sodass dann die veränderten Kameraparameter die ermittelten Kameraparameter für das Bild darstellen.

15. Bildverarbeitungsanlage nach Anspruch 14, **dadurch gekennzeichnet, dass** sie durch einen Computer, durch einen Tablet-Computer oder durch ein Smartphone gebildet ist.

## Claims

1. Method for the determination of parameters of a camera, with which an image of a surrounding area is recorded, wherein the method comprises the following steps:
- preparing of a three-dimensional geometrical description of visual features (02) of the surrounding area;
- initial establishing of camera parameters, which include at least one extrinsic parameter of the camera;
- recording of an image of the surrounding area with the camera;
- applying of a feature detector to the image in order to extract visual features (01);
- applying of the initially established camera parameters to the three-dimensional geometrical description of the visual features (02) of the surrounding area in order to display the visual features (02) of the surrounding area on a feature image;
- comparing by means of the positions of the features in the image of a set of visual features (01) extracted from the image to a set of visual features (02) in the feature image in order to determine a measure of concordance between the two sets;
- changing the camera parameters and applying the changed camera parameters to the three-dimensional geometrical description of the visual features (02) of the surrounding area in order to display the visual features (02) of the surrounding area on an additional feature image; and
- again comparing by means of the positions of the features in the image a set of visual features (01) extracted from the image to a set of visual features (02) in the additional feature image in order to determine the measure of concordance between the two sets, wherein the steps of the method of changing the camera parameters, applying the changed camera parameters and comparing the sets are repeated until the ascertained measure of concordance has passed a limit value, so that the changed camera parameters then constitute the ascertained camera parameters for the image.

2. Method according to claim 1, **characterized in that** the surrounding area is formed by a natural surrounding area and the camera is formed by a real camera.

3. Method according to claim 1 or 2, **characterized in that**, when comparing the set of visual features (01) extracted from the image with the set of visual features (02) in the feature image, one compares the absolute and relative positions of the individual visual features (01, 02).

4. Method according to claim 3, **characterized in that**, when comparing the set of visual features (01) extracted from the image with the set of visual features (02) in the feature image, visual properties other than the visual features (01, 02) are left out of account.

5. Method according to one of claims 1 to 4, **characterized in that** the changing of the camera parameters is done at random and within limits.

6. Method according to claim 5, **characterized in that** the limits for the changing of the camera parameters are decreased when the repeatedly determined measure of concordance is larger than the previously determined measure of concordance.

7. Method according to one of claims 1 to 6, **characterized in that** the set of the visual features (01) extracted from the image is a proper subset of the visual features (01) extracted from the image, and the proper subset of the visual features (01) extracted from the image is determined by selecting those of the extracted visual features (01), which do not pass a lower limit value for a measure of reliability.

8. Method according to one of claims 1 to 7, **characterized in that** the prepared description of the visual features (02) of the surrounding area describes those visual features which can be detected with the feature detector.

9. Method according to claim 8, **characterized in that** the preparing of the three-dimensional geometrical description of visual features (02) of the surrounding area is done by applying the feature detector to several images of the surrounding area recorded from different perspectives.

10. Method according to one of claims 1 to 9, **characterized in that** the steps of the repeated changing of the camera parameters are carried out several times, starting with the initially established camera parameters, the repeated application of the changed camera parameters to the three-dimensional geometrical description of the visual features (02) of the surrounding area and the repeated comparison of a set of visual features (01) extracted from the image with a set of visual features (02) in the additional feature image until a limit value is passed by the ascertained measure of concordance, wherein those of the last changed camera parameters are selected to be the ascertained camera parameters for the image, when the ascertained measure of concordance passes the limit value by the most.

11. Method according to one of claims 1 to 10, **characterized in that** it is applied to a moving picture, wherein the recorded image forms a first image and wherein the method comprises the following additional steps:
- recording of a second image of the surrounding area with the camera;
- applying the feature detector to the second image in order to extract visual features (01);
- applying of the camera parameters ascertained for the first image to the three-dimensional geometrical description of the visual features (02) of the surrounding area in order to display the visual features (02) of the surrounding area on a feature image;
- comparing of a set of visual features (01) extracted from the second image to a set of visual features (02) in the feature image in order to determine a measure of concordance between the two sets;
- changing the camera parameters and applying the changed camera parameters to the three-dimensional geometrical description of the visual features (02) of the surrounding area in order to display the visual features (02) of the surrounding area on an additional feature image; and
- comparing a set of visual features (01) extracted from the second image to a set of visual features (02) in the additional feature image in order to determine the measure of concordance between the two sets, wherein the steps of changing the camera parameters, applying the changed camera parameters and comparing the sets are repeated until the ascertained measure of concordance has passed a limit value, so that the last changed camera parameters then constitute the ascertained camera parameters for the second image.

12. Method according to claim 11, **characterized in that** the moving picture comprises, besides the first image and the second image, a plurality of other successive images, for which each time the steps indicated for the second image are carried out, provided that the first image is formed by the previous image each time.

13. Method according to a claim referred back to claim 9, **characterized in that** the images of the surrounding area recorded from different perspectives are formed by several of the images of the moving picture.

14. Image processing system, which is designed to implement the method according to one of claims 1 to 13, whereas the system comprises the following means:
- means for providing a three-dimensional geometrical description of visual features (02) of the surrounding area;
- camera for recording an image of the surrounding area;
- means for initially determining of camera parameters, which at least comprise an extrinsic parameter of the camera;
- feature detector in order to extract visual features (01) from the image;
- means for applying the initially determined camera parameters to the three-dimensional geometrical description of the visual features (02) of the surrounding area, in order to display the visual features (02) of the surrounding area to a feature image;
- means for comparing by means of the positions of the features in the image of a set of visual features (01) extracted from the image to a set of visual features (02) in the feature image, in order to determine a measure of concordance between the two sets;
- means for changing of the camera parameters and for applying the changed camera parameters to the three-dimensional geometrical description of the visual features (02) of the surrounding area, in order to display the visual features (02) of the surrounding area to an additional feature image; and
- means for again comparing by means of the positions of the features in the image a set of visual features (01) extracted from the image to a set of the visual features (02) in the additional feature image, in order to determine the measure of concordance between the two sets, wherein the steps of changing the camera parameters, applying the changed camera parameters and comparing the sets are repeated until the ascertained measure of concordance has passed a limit value, so that the changed camera parameters then constitute the ascertained camera parameters for the image.

15. Image processing system according to claim 14, **characterized in that** it is formed by a computer, by a tablet computer or by a smartphone.

## Revendications

1. Procédé pour la détermination de paramètres d'une caméra permettant de capturer une image d'un environnement, le procédé comprenant les étapes suivantes :
- mise à disposition d'une description géométrique tridimensionnelle de caractéristiques visuelles (02) de l'environnement ;
- définition initiale de paramètres de caméra, lesquels incluent au moins un paramètre extrinsèque de la caméra ;
- capture d'une image de l'environnement à l'aide de la caméra ;
- application d'un détecteur de caractéristiques sur l'image, pour extraire des caractéristiques visuelles (01) ;
- application des paramètres de caméra définis initialement à la description géométrique tridimensionnelle des caractéristiques visuelles (02) de l'environnement, pour reproduire les caractéristiques visuelles (02) de l'environnement sur une image de caractéristiques ;
- comparaison, à l'aide des positions des caractéristiques dans l'image, d'une quantité des caractéristiques visuelles (01) extraites à partir de l'image avec une quantité de caractéristiques visuelles (02) dans l'image de caractéristiques, afin de déterminer un degré de concordance entre les deux quantités ;
- modification des paramètres de caméra et application des paramètres de caméra modifiés à la description géométrique tridimensionnelle des caractéristiques visuelles (02) de l'environnement, afin de reproduire les caractéristiques visuelles (02) de l'environnement sur une autre image de caractéristiques ; et
- nouvelles comparaison, à l'aide des positions des caractéristiques dans l'image, d'une quantité des caractéristiques visuelles (01) extraites à partir de l'image avec une quantité des caractéristiques visuelles (02) dans l'autre image de caractéristiques, afin de déterminer le degré de concordance entre les deux quantités, où les étapes de modification des paramètres de caméra, d'application des paramètres de caméra modifiés et de comparaison des quantités sont répétées jusqu"à ce que le degré de concordance déterminé ait dépassé une valeur seuil, de sorte que les paramètres de caméra modifiés représentent alors les paramètres de caméra déterminés pour l'image.

2. Procédé selon la revendication 1, **caractérisé en ce que** l'environnement est formé par un environnement naturel et la caméra consiste en une caméra réelle.

3. Procédé selon la revendication 1 ou 2, **caractérisé en ce que** lors de la comparaison de la quantité des caractéristiques visuelles (01) extraites à partir de l'image avec la quantité des caractéristiques visuelles (02) dans l'image de caractéristiques, les positions absolues et relatives des différentes caractéristiques visuelles (01, 02) sont comparées.

4. Procédé selon la revendication 3, **caractérisé en ce que** lors de la comparaison de la quantité des caractéristiques visuelles (01) extraites à partir de l'image avec la quantité des caractéristiques visuelles (02) dans l'image de caractéristiques, d'autres propriétés visuelles ne sont pas prises en compte en dehors des caractéristiques visuelles (01, 02) en tant que telles.

5. Procédé selon l'une des revendications 1 à 4, **caractérisé en ce que** la modification des paramètres de caméra est effectuée de manière aléatoire et dans des limites.

6. Procédé selon la revendication 5, **caractérisé en ce que** les limites pour la modification des paramètres de caméra à modifier sont réduites lorsque le degré de concordance déterminé de façon répétée est supérieur au degré de concordance déterminé précédemment.

7. Procédé selon l'une des revendications 1 à 6, **caractérisé en ce que** la quantité des caractéristiques visuelles (01) extraites à partir de l'image est une quantité partielle réelle des caractéristiques visuelles (01) extraites à partir de l'image, où la quantité partielle réelle des caractéristiques visuelles (01) extraites à partir de l'image est déterminée en sélectionnant les caractéristiques visuelles (01) extraites qui ne tombent pas en dessous d'une valeur seuil pour un degré de fiabilité.

8. Procédé selon l'une des revendications 1 à 7, **caractérisé en ce que** la description mise à disposition pour les caractéristiques visuelles (02) de l'environnement décrit des caractéristiques visuelles telles que détectables par le détecteur de caractéristiques.

9. Procédé selon la revendication 8, **caractérisé en ce que** la mise à disposition de la description géométrique tridimensionnelle de caractéristiques visuelles (02) de l'environnement est effectuée en appliquant le détecteur de caractéristiques à plusieurs images de l'environnement capturées sous différentes perspectives.

10. Procédé selon l'une des revendications 1 à 9, **caractérisé en ce que** les étapes de modification répétée des paramètres de caméra à partir des paramètres de caméra définis initialement, d'application répétée des paramètres de caméra modifiés à la description géométrique tridimensionnelle des caractéristiques visuelles (02) de l'environnement, et de comparaison répétée d'une quantité des caractéristiques visuelles (01) extraites à partir de l'image avec une quantité des caractéristiques visuelles (02) dans l'autre image de caractéristiques sont exécutées plusieurs fois jusqu'au dépassement d'une valeur seuil par le degré de concordance déterminé, où les paramètres de caméra respectivement modifiés en dernier pour lesquels le degré de concordance déterminé dépasse le plus la valeur seuil sont sélectionnés comme paramètres de caméra déterminés pour l'image.

11. Procédé selon l'une des revendications 1 à 10, **caractérisé en ce que** celui-ci est mis en oeuvre sur une image animée, l'image capturée constituant une première image, et le procédé comprenant en outre les étapes suivantes :
- capture d'une deuxième image de l'environnement à l'aide de la caméra ;
- application du détecteur de caractéristiques sur la deuxième image, pour extraire des caractéristiques visuelles (01) ;
- application des paramètres de caméra déterminés pour la première image à la description géométrique tridimensionnelle des caractéristiques visuelles (02) de l'environnement, pour reproduire les caractéristiques visuelles (02) de l'environnement sur une image de caractéristiques ;
- comparaison d'une quantité des caractéristiques visuelles (01) extraites à partir de la deuxième image avec une quantité des caractéristiques visuelles (02) dans l'image de caractéristiques, pour déterminer un degré de concordance entre les deux quantités ;
- modification des paramètres de caméra et application des paramètres de caméra modifiés à la description géométrique tridimensionnelle des caractéristiques visuelles (02) de l'environnement, pour reproduire les caractéristiques visuelles (02) de l'environnement sur une autre image de caractéristiques ; et
- comparaison d'une quantité des caractéristiques visuelles (01) extraites à partir de la deuxième image avec une quantité des caractéristiques visuelles (02) dans l'autre image de caractéristiques, pour déterminer le degré de concordance entre les deux quantités, où les étapes de modification des paramètres de caméra, d'application des paramètres de caméra modifiés et de comparaison des quantités sont répétées jusqu'à ce que le degré de concordance déterminé ait dépassé une valeur seuil, de sorte que les paramètres de caméra modifiés en dernier représentent alors les paramètres de caméra déterminés pour la deuxième image.

12. Procédé selon la revendication 11, **caractérisé en ce que** l'image animée comprend une pluralité d'autres images, par rapport à la première image et à la deuxième image, pour lesquelles les étapes indiquées respectivement pour la deuxième image sont exécutées dans la mesure où la première image est formée par l'image précédente respective.

13. Procédé selon la revendication 12 rapportée à la revendication 9, **caractérisé en ce que** les images de l'environnement capturées sous différentes perspectives sont formées par plusieurs des images de l'image animée.

14. Dispositif de traitement d'image conçu pour l'exécution du procédé selon l'une des revendications 1 à 13, le dispositif comprenant les éléments suivants :
- des moyens pour la mise à disposition d'une description géométrique tridimensionnelle de caractéristiques visuelles (02) de l'environnement ;
- une caméra destinée à capturer une image de l'environnement ;
- des moyens pour la définition initiale de paramètres de caméra, lesquels incluent au moins un paramètre extrinsèque de la caméra ;
- un détecteur de caractéristiques destiné à extraire des caractéristiques visuelles (01) à partir de l'image ;
- des moyens pour l'application des paramètres de caméra définis initialement à la description géométrique tridimensionnelle des caractéristiques visuelles (02) de l'environnement, pour la reproduction des caractéristiques visuelles (02) de l'environnement sur une image de caractéristiques ;
- des moyens pour comparer, à l'aide des positions des caractéristiques dans l'image, une quantité des caractéristiques visuelles (01) extraites à partir de l'image avec une quantité des caractéristiques visuelles (02) dans l'image de caractéristiques, afin de déterminer un degré de concordance entre les deux quantités ;
- des moyens pour la modification des paramètres de caméra et l'application des paramètres de caméra modifiés à la description géométrique tridimensionnelle des caractéristiques visuelles (02) de l'environnement, afin de reproduire les caractéristiques visuelles (02) de l'environnement sur une autre image de caractéristiques ; et
- des moyens pour une nouvelle comparaison, à l'aide des positions des caractéristiques dans l'image, d'une quantité des caractéristiques visuelles (01) extraites à partir de l'image avec une quantité des caractéristiques visuelles (02) dans l'autre image de caractéristiques, afin de déterminer le degré de concordance entre les deux quantités, où les étapes de modification des paramètres de caméra, d'application des paramètres de caméra modifiés et de comparaison des quantités sont répétées jusqu'à ce que le degré de concordance déterminé ait dépassé une valeur seuil, de sorte que les paramètres de caméra modifiés représentent les paramètres de caméra déterminés pour l'image.

15. Dispositif de traitement d'image selon la revendication 14, **caractérisé en ce que** celui-ci consiste en un ordinateur, une tablette ou un smartphone.
